# EUROPEAN PATENT APPLICATION

(11) **EP 3 076 667 A1**
(43) Date of publication of application: **05.10.2016**
(21) Application number: 16162342.6
(22) Date of filing: 24.03.2016
(51) Int. Cl.: H04N 9/31, G03B 21/00, G01B 11/25, G02B 7/00

(54) **HOLDING APPARATUS, PROJECTION APPARATUS, MEASUREMENT APPARATUS, AND HOLDING METHOD**

(30) Priority: 31.03.2015 JP 2015074500
(71) Applicant: Canon Kabushiki Kaisha, Tokyo 146-8501 (JP)
(72) Inventor: KOIKE, Kana, Ohta-ku, Tokyo (JP)
(74) Representative: Williamson, Brian

(57) **Abstract**

A holding apparatus includes a supporting member (13) having positioning portions for positioning a pattern light generation unit (3), configured to support the pattern light generation unit (3), and a fixing member (14) configured to be in contact with an outer circumference of the pattern light generation unit (3) to hold the pattern light generation unit (3), the fixing member being fixed to the supporting member. The fixing member (14) includes abutting portions (17a,17b,17c) configured to be in contact with parts of the outer circumference of the pattern light generation unit, and elastic members (19a,19b) configured to press portions of the pattern light generation unit contacting the abutting portions onto the abutting portions.

## Description

### BACKGROUND OF THE INVENTION

### Field of the Invention

The present invention relates to an apparatus for holding a pattern light generation unit, a projection apparatus, a measurement apparatus, and a holding method.

### Description of the Related Art

In recent years, there is known an apparatus for generating pattern light by using a pattern light generation unit such as a digital mirror device (DMD), a liquid crystal type optical modulation device, and a pattern-formed mask, and then performing pattern projection, exposure, and measurement.

For example, a certain measurement apparatus using a pattern projection method projects pattern light on a target, captures an image of the target, and measures the shape of the target based on the captured image. The measurement apparatus includes a measurement head including a projection unit for projecting pattern light and an imaging unit for capturing an image of the target. The measurement apparatus is provided with a calculation unit inside or outside the measurement apparatus. The projection unit generates pattern light through the pattern light generation unit. The projection unit projects pattern light on the target through a projection lens. The imaging unit captures an image of the target on which the pattern light is projected, by using a sensor through an imaging lens. The calculation unit performs triangulation-based calculations by using the captured image to acquire the shape of the target.

Component members such as the pattern light generation unit and the projection lens in the projection unit need to be fixed by holding members so that these component members are not shifted. Japanese Patent Application Laid-Open No. 2010-175583 discusses a DMD chip attachment structure in a projection display apparatus. In the DMD chip attachment structure discussed in Japanese Patent Application Laid-Open No. 2010-175583, a DMD chip, a DMD control circuit board, and a heat sink are collectively fastened and fixed to a housing by using screws with compression springs applied to the screws.

The pattern light generation unit, for example, a DMD chip is provided with holes (attachment holes) for attaching it to a holding member. The DMD chip is fixed to the holding member by applying pins or screws through the holes. Since each attachment hole on the DMD chip is formed more largely than the outer diameter of a pin or screw to be applied to the relevant hole, there is a gap between the hole and the pin or screw. This also applies to the DMD chip discussed in Japanese Patent Application Laid-Open No. 2010-175583. Therefore, repetitive use of the DMD chip or a thermal expansion due to temperature changes may cause a positional shift or distortion of the DMD chip. Further, since the gap between each attachment hole of the DMD chip and a relevant pin or screw is produced in an arbitrary direction (angle) from the center of the hole, it is difficult to predict the direction of a positional shift or distortion. If a positional shift or distortion of the DMD chip occurs, the center axis of the incident plane of the DMD chip will deviate from the optical axis of the projection lens. This deviation causes the DMD chip to generate a partial loss or distortion of pattern light (light intensity distribution).

### SUMMARY OF THE INVENTION

The present invention is directed to providing a holding apparatus for reducing a loss and distortion of pattern light generated by a pattern light generation unit.

The present invention in its first aspect provides a holding apparatus as specified in claims 1 to 6.

The present invention in its second aspect provides a projection apparatus as specified in claim 7.

The present invention in its third aspect provides a measurement apparatus as specified in claim 8.

The present invention in its fourth aspect provides a holding method as specified in claims 9 and 10.

Further features of the present invention will become apparent from the following description of exemplary embodiments with reference to the attached drawings.

### BRIEF DESCRIPTION OF THE DRAWINGS

Fig. 1 schematically illustrates a measurement apparatus according to a first exemplary embodiment.
Fig. 2 illustrates an overview of a digital mirror device (DMD).
Fig. 3 illustrates assemblies of a holding apparatus for holding the DMD.
Fig. 4 illustrates a state where the DMD is attached to a supporting member.
Fig. 5 illustrates a state where the DMD is held by a fixing member.
Fig. 6 illustrates a holding apparatus according to a second exemplary embodiment.
Fig. 7 is a flowchart illustrating a method for holding the DMD.

### DESCRIPTION OF THE EMBODIMENTS

Desirable exemplary embodiments of the present invention will be described in detail below with reference to the accompanying drawings. In the following exemplary embodiments, a measurement apparatus for measuring the shape of a target will be described as an example.

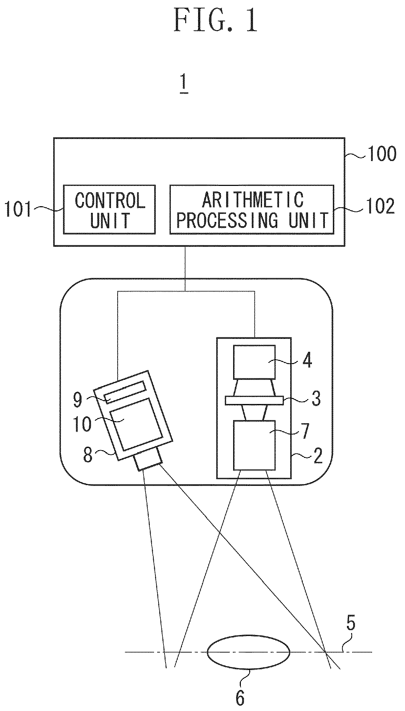

Fig. 1 schematically illustrates a measurement apparatus according to a first exemplary embodiment. A measurement apparatus 1 is an apparatus for measuring the three-dimensional shape of a target 6. As illustrated in Fig. 1, the measurement apparatus 1 includes a projection unit 2, an imaging unit 8, and an information processing unit 100.

The projection unit 2 includes a digital mirror device (hereafter referred to as a DMD) 3 (pattern light generation unit), an illumination unit 4 for illuminating the DMD 3, and a projection optical system 7 for projecting pattern light (light intensity distribution) generated by the DMD 3 on the target 6 placed on a test surface 5. The DMD 3 (chip) is held by a holding apparatus (described below).

The information processing unit 100 includes a control unit 101 and an arithmetic processing unit 102. The information processing unit 100 is electrically connected to the projection unit 2 and the imaging unit 8. According to a control instruction from the control unit 101, the DMD 3 changes the angles of each mirror to reflect incident light from the illumination unit 4, thus generating pattern light having a line, a dot, and other patterns.

The imaging unit 8 includes an image sensor 9, and an image forming optical system 10 for focusing on the light receiving surface of the image sensor 9 the light from the target 6 on which the pattern light generated by the projection unit 2 is projected. According to a control instruction from the control unit 101, the imaging unit 8 performs imaging processing for capturing an image of the target 6 on which the pattern light is projected, and converts the luminance distribution on the light receiving surface of the image sensor 9 into a gradation distribution discretely sampled by the image sensor 9. The image sensor 9 outputs to the arithmetic processing unit 102 data of the image of the target 6 on which the pattern light is projected. The control unit 101 controls the projection unit 2 to project a predetermined pattern onto the target 6 at a predetermined timing, and at the same time controls the imaging unit 8 to capture an image of the target 6. Based on information of the image output from the imaging unit 8, the arithmetic processing unit 102 calculates information of three-dimensional coordinates of the target 6 through the space coding method to obtain the shape, position, and orientation of the target 6.

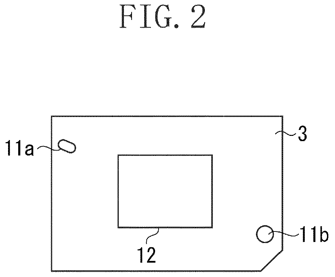

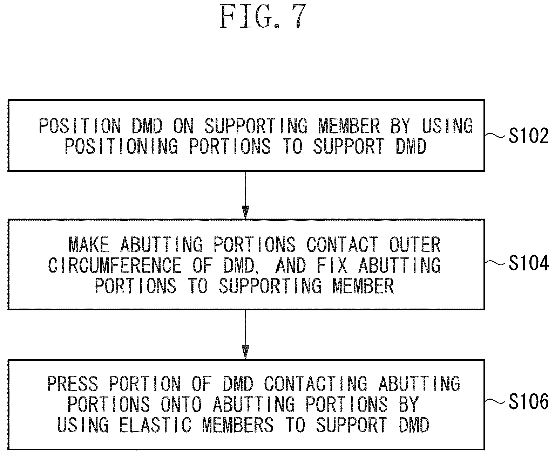

The DMD 3 attachment structure (holding apparatus) will be described in detail below. Fig. 2 illustrates an overview of the DMD 3. Fig. 7 is a flowchart illustrating a method for holding the DMD 3. As illustrated in Fig. 2, as positioning portion/s, the DMD 3 is provided with positioning at least one positioning hole (attachment hole/holes) 11a and 11b for positioning the DMD 3 onto a supporting member 13. Positional accuracy is guaranteed with respect to the positioning holes 11a and 11b relative to a usage area (incident range) 12 in which each mirror of the DMD 3 is arranged. The DMD 3 is made of alumina and the like.

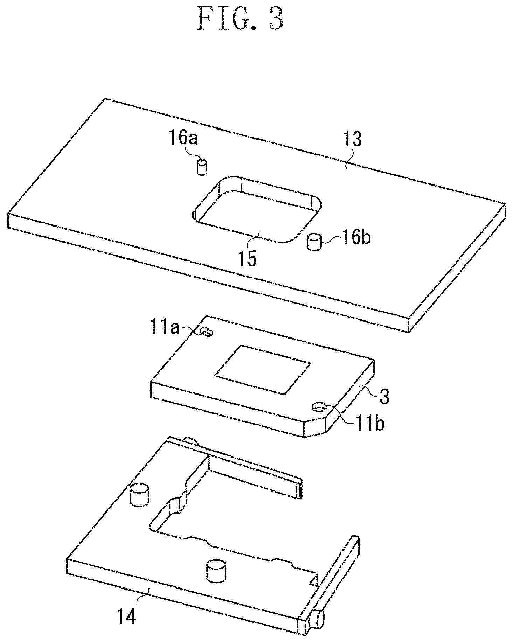

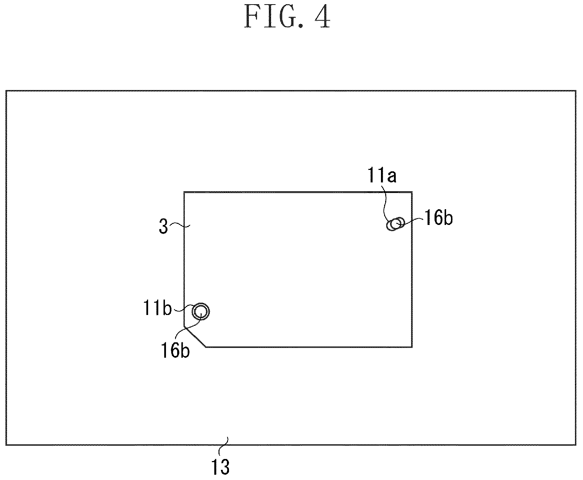

Fig. 3 is an exploded perspective view illustrating the supporting member 13, the DMD 3 to be supported by the supporting member 13, and a fixing member 14. As illustrated in Fig. 3, the supporting member 13 is provided with a rectangular opening 15 for exposing the usage area 12 of the DMD 3. Positioning pins 16a and 16b (fitting members) for positioning the DMD 3 are removably provided on the supporting member 13. In step S102, the DMD 3 is positioned by inserting the positioning pins 16a and 16b into the positioning holes 11a and 11b (hole portions) made on the DMD 3, respectively. Fig. 4 illustrates a state where the DMD 3 is attached to the supporting member 13. The positioning holes 11a and 11b are formed more largely than the diameters of the positioning pins 16a and 16b, respectively.

The supporting member 13 is made of aluminum from the viewpoint of cost and processability. Since the coefficient of linear thermal expansion differs between alumina which is the material of the DMD 3 and aluminum which is the material of the supporting member 13, the two materials reveal different amounts of expansion and contraction by ambient temperature change or heat generated by the DMD 3. As a result, the DMD 3 may possibly move with respect to the supporting member 13. Further, stress generated by the thermally expanded positioning pins 16a and 16b may possibly distort or damage the DMD 3. In this case, even in a case where the supporting member 13 and the DMD 3 are bonded, the DMD 3 will move while distorting the bonded portion. If the DMD 3 is bonded, time, effort, and cost for replacing the DMD 3 will increase.

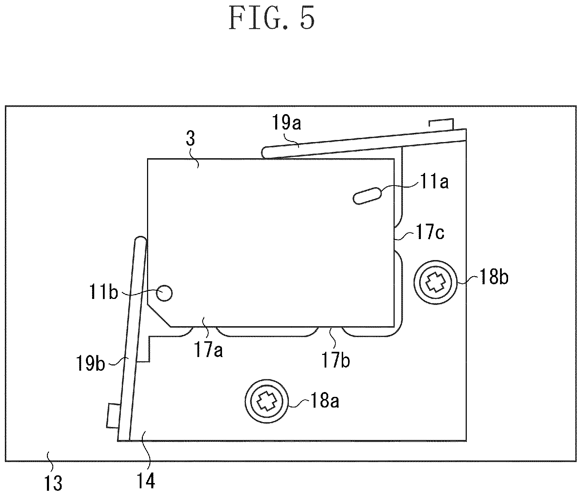

Fig. 5 is a plan view illustrating details of a configuration of the DMD 3 and at least one abutting portion on the fixing member 14. In step S104, after positioning the DMD 3 by fitting the positioning pins 16a and 16b as described above, projecting portions 17a, 17b, and 17c of the fixing member 14 are abutted to (made come in contact with) the outer circumference (contour) of the DMD 3. Then, in a state where the fixing member 14 is in contact with the DMD 3, the fixing member 14 is fixed to the supporting member 13 by using screws 18a and 18b. Since the fixing member 14 is attached according to the outer circumference (contour) of the DMD 3, the position of the fixing member 14 can be adjusted on the supporting member 13. In the present exemplary embodiment, the diameters of screw holes of the supporting member 13 are formed more largely than the screws 18a and 18b to enable adjustment of the position of the fixing member 14.

In step S106, a plate spring 19a as an elastic member (or biasing member) is attached to the side of the DMD 3 opposite to the side contacting the projecting portions 17a and 17b. Then, a plate spring 19b might also be attached to the side of the DMD 3 opposite to the side contacting the projecting portion 17c. More specifically, the plate springs 19a and 19b press the portions of the DMD 3 in contact with the projecting portions 17a, 17b, and 17c onto the projecting portions 17a, 17b, and 17c to hold the DMD 3. The plate springs 19a and 19b are connected with the fixing member 14. Spring forces produced by the bending of the plate springs 19a and 19b elastically press the DMD 3 onto the projecting portions 17a, 17b, and 17c to fix the DMD 3. The above has been described with reference to two elastic members 19a and 19b and three projecting portions 17a, 17b and 17c but it should be understood that the same effect of holding the DMD 3 may be achieved by holding the DMD 3 between one elastic member and one projecting portion. Alternatively, there may be provided a greater number of elastic members and projecting portions.

Then, after fixing the fixing member 14 to the supporting member 13, when the DMD 3 has been fixed by the fixing member 14, the positioning pins 16a and 16b used for the first positioning are extracted (removed) from the positioning holes 11a and 11b, respectively. In a state where the pins 16a and 16b have been extracted, the positioning pins 16a and 16b do not distort the DMD 3 even if the ambient temperature changes or heat is generated by the DMD 3. This state reduces the effect by the difference in the coefficient of linear thermal expansion (difference in the amount of distortion) between the DMD 3 and the supporting member 13. Therefore, this enables alleviating such problems that distort or damage the DMD 3.

Since distortion of the DMD 3, such as a thermal expansion, is absorbed by elastic deformation of the plate springs 19a and 19b, predicting a positional shift between the supporting member 13 and the DMD 3 is easy to a certain extent. Predicting a positional shift makes it possible to guarantee the positional accuracy by measurement error correction and apparatus design.

The accuracy of relative positions of the projecting portions 17a, 17b, and 17c of the fixing member 14 to the usage area (incident range) 12 of the DMD 3 is lower than the accuracy of relative positions of the positioning holes 11a and 11b on the DMD 3 to the usage area (incident range) 12 of the DMD 3. However, since the DMD 3 is held by the fixing member 14 after obtaining the positioning accuracy in a state where the DMD 3 is supported by the positioning pins 16a and 16b by using the positioning holes 11a and 11b on the DMD 3, respectively, the positioning accuracy of the DMD does not decrease.

Further, since the DMD 3 is fixed without using an adhesive, it is easy to detach and replace the DMD 3 if the DMD 3 becomes defective. Spring forces by the bending of the plate springs 19a and 19b can be arbitrarily set according to the required force (for example, drive acceleration) based on the apparatus and the materials of parts.

The shape of the DMD 3 is not limited to a rectangle. The DMD 3 may have a polygonal contour such as a hexagon. In this case, the DMD 3 may be pressed by the portions of the fixing member 14 contacting the DMD 3 while pressing arbitrary positions of the outer circumference of the DMD 3 by using elastic members.

As described above, according to the present exemplary embodiment, it is possible to provide a holding apparatus for reducing a loss and distortion of pattern light generated by a pattern light generation unit.

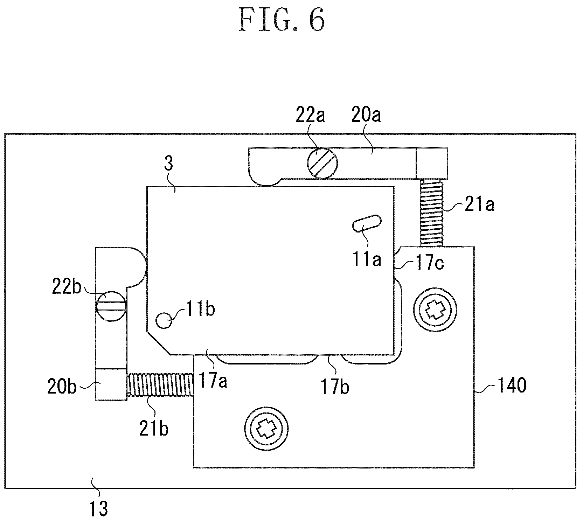

Fig. 6 illustrates a holding apparatus of the DMD 3 according to a second exemplary embodiment. Also in the present exemplary embodiment, a fixing member 140 is provided with projecting portions 17a, 17b, and 17c, similar to the first exemplary embodiment. Similar to the first exemplary embodiment, after positioning the DMD 3 by fitting the positioning pins 16a and 16b, the projecting portions 17a, 17b, and 17c of the fixing member 140 are abutted to the outer circumference (contour) of the DMD 3. Then, in a state where the fixing member 140 is abutted to the DMD 3, the fixing member 140 is fixed to the supporting member 13 by using screws.

Then, a lever 20a as an elastic member is also attached to the DMD 3 opposite to the side contacting the projecting portions 17a and 17b. A lever 20b is also attached to the DMD 3 opposite to the side contacting the projecting portion 17c. Compression springs 21a and 21b are provided between the fixing member 140 and the levers 20a and 20b, respectively. The levers 20a and 20b are provided with a hole having a size for maintaining a predetermined gap between the hole and wheel pins 22a and 22b, respectively. The wheel pins 22a and 22b are fixed to the supporting member 13 allowing the levers 20a and 20b to rotate centering on the wheel pins 22a and 22b. Spring forces caused by the compression springs 21a and 21b elastically press the DMD 3 onto the projecting portions 17a, 17b, and 17c to fix the DMD 3. The above has been described with reference to two elastic members 20a and 20b and three projecting portions 17a, 17b and 17c but it should be understood that the same effect of holding the DMD 3 may be achieved by holding the DMD 3 between one elastic member and one projecting portion. Alternatively, there may be provided a greater number of elastic members and projecting portions.

Then, after fixing the fixing member 140 to the supporting member 13, when the DMD 3 has been fixed by the fixing member 140, the positioning pins 16a and 16b used for the positioning are extracted (removed) from the positioning holes 11a and 11b, respectively. Therefore, this holding apparatus can achieve similar effects to the first exemplary embodiment.

While the present invention has specifically been described based on the above-described preferred exemplary embodiments, the present invention is not limited thereto but can be modified in diverse ways within the ambit of the appended claims. For example, the present invention is not limited to the holding of the pattern light generation unit in the measurement apparatus according to the above-described exemplary embodiments, and may also be applicable to the holding of various pattern light generation units, such as the holding of a liquid crystal panel of a projection display apparatus such as a liquid crystal projector, and the holding of a DMD of a DMD-based optical pattern projection apparatus. Further, the information processing unit 100 may be provided outside the measurement apparatus 1.

The positioning pins 16a and 16b of the supporting member 13 may not necessarily be removed, and may be loosened and inserted into the positioning holes 11a and 11b on the DMD 3, respectively. Not only pins but also fitting members such as screws may be used. Although the DMD 3 is supported by the supporting member 13 by fitting the fitting members into the positioning holes 11a and 11b, the method for positioning the DMD 3 is not limited thereto. The DMD 3 may be positioned by aligning the positioning holes 11a and 11b on the DMD 3 with holes or reference portions on the supporting member 13.

Further, a control circuit board and a heat sink of the DMD 3 may be attached to the DMD 3 held by the holding apparatus, by using elastic members such as springs.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A holding apparatus for holding a pattern light generation unit, the holding apparatus comprising:
a supporting member having a positioning portion for positioning the pattern light generation unit and to support the pattern light generation unit; and
a fixing member configured to contact a portion of an outer circumference of the pattern light generation unit to hold the pattern light generation unit, the fixing member being fixed to the supporting member,
wherein the fixing member comprises:
an abutting portion configured to contact a portion of the outer circumference of the pattern light generation unit; and
a biasing member configured to bias the pattern light generation unit towards the abutting portion.

2. The holding apparatus according to claim 1, wherein the positioning portion includes a removable fitting member configured to be removably inserted into hole portions of the pattern light generation unit.

3. The holding apparatus according to claim 2, wherein the fitting members fit into the hole portions for positioning the pattern light generation unit onto the supporting member, and
wherein the fitting members are configured to be extracted from the hole portions thereby allowing the pattern light generation unit to be held by the abutting portion and the biasing member.

4. The holding apparatus according to claim 2 or 3, wherein the fitting member is a pin.

5. The holding apparatus according to any one of claims 1 to 4, wherein the biasing member provides a biasing force to the outer circumference of the pattern light generation unit at a side which is opposite to the side which the abutting portion contacts the outer circumference of the pattern light generation unit.

6. The holding apparatus according to any one of claims 1 to 5, wherein the biasing member is a plate spring or a compression spring.

7. A projection apparatus comprising:
a pattern light generation unit;
a holding apparatus according to any one of claims 1 to 6, configured to hold the pattern light generation unit; and
an optical system configured to project pattern light generated by the pattern light generation unit.

8. A measurement apparatus comprising:
the projection apparatus according to claim 7; and
an optical system configured to capture an image of a target on which the pattern light is projected.

9. A holding method for holding a pattern light generation unit, the holding method comprising:
positioning and supporting the pattern light generation unit on a supporting member using positioning portions; and
fixing a fixing member to the supporting member, the fixing member comprising an abutting portion and a biasing member; and
inserting the pattern light generation unit into the fixing member;
wherein the biasing member biases the pattern light generation unit towards the abutting portion thereby holding the pattern light generation unit in position.

10. The holding method according to claim 9, wherein the positioning portions are removable fitting members removably inserted into hole portions on the pattern light generation unit,
wherein, in the positioning and supporting step, the fitting members are fitted into the hole portions of the pattern light generation unit to position the pattern light generation unit onto the supporting member, and
wherein in the case that the light pattern generation unit is held in position by the abutting portion and the biasing member the fitting members are extracted from the hole portions.
